# FASCICULE DE BREVET EUROPEEN

(11) **EP 3 797 655 B1**
(45) Date de publication et mention de la délivrance du brevet: **08.06.2022**
(21) Numéro de dépôt: 20196757.7
(22) Date de dépôt: 17.09.2020
(51) Int. Cl.: A47J 36/06, A47J 36/32

(54) **COUVERCLE DE RÉCIPIENT DE CUISSON MUNI D'UN DISPOSITIF DE MESURE DU DÉBIT VAPEUR**
DECKEL EINES KOCHBEHÄLTERS, DER MIT EINER MESSVORRICHTUNG FÜR DEN DAMPFDURCHSATZ AUSGESTATTET IST
COOKING CONTAINER LID PROVIDED WITH A DEVICE FOR MEASURING THE STEAM FLOW

(30) Priorité: 27.09.2019 FR 1910739
(43) Date de publication de la demande: 31.03.2021
(73) Titulaire: SEB S.A., 69130 Ecully (FR)
(72) Inventeur: GUEGAN, Laurent, 74150 LORNAY (FR)
(74) Mandataire: SEB Développement

(56) Documents cités:
- WO-A1-2013/081558
- WO-A1-2017/077569
- JP-A- 2011 072 514

## Description

### Domaine technique de l'invention

La présente invention concerne un couvercle destiné à coopérer avec un récipient de cuisson, par exemple une casserole, une sauteuse ou un faitout, plus particulièrement un couvercle comprenant un dispositif de mesure du débit de vapeur produite lors d'une cuisson dite « aqueuse ».

Par cuisson dite « aqueuse », on comprend une cuisson basée sur l'ébullition mettant en oeuvre majoritairement de l'eau, comme par exemple pour faire cuire des pâtes ou du riz, une cuisson mijotée mettant en œuvre une sauce, comme par exemple un bœuf bourguignon ou une cuisson pour réduire un liquide, qui consiste à laisser volontairement l'eau s'évaporer d'un liquide pour que celui-ci acquiert une texture plus onctueuse et concentre ses saveurs.

On connaît du brevet EP2785221 un couvercle destiné à coopérer avec un récipient de cuisson. Le couvercle comprend un capot muni d'un dispositif de mesure du débit de vapeur produite lors d'une cuisson dite « aqueuse ». Le dispositif de mesure du débit de vapeur comporte une chambre agencée au-dessus du capot qui comporte un orifice primaire d'admission de vapeur dans la chambre. La chambre comporte au moins un orifice d'évacuation de la vapeur et un capteur de température.

Un tel dispositif de mesure du débit de vapeur permet de détecter un débit de vapeur qui caractérise le début d'ébullition, mais pas un débit de vapeur en régime établi d'ébullition. En effet, lors de la cuisson, le capteur de température va détecter une élévation de la température qui lorsqu'elle atteint environ 100°C caractérise l'atteinte de l'ébullition. Lorsque le régime d'ébullition est établi, la température mesurée par le capteur reste à environ 100°C quelle que soit la quantité de vapeur produite.

On connait également du brevet JP2011072514 un couvercle muni d'un dispositif de mesure de la température de la vapeur produite lors d'une cuisson dite « aqueuse ».

Le but de la présente invention est de remédier aux inconvénients précités et de proposer un couvercle de récipient de cuisson qui permette de mesurer un débit de vapeur produite lors d'une cuisson dite « aqueuse » en régime établi d'ébullition.

Un autre but de l'invention est de proposer un couvercle de récipient de cuisson qui soit de conception simple et économique à mettre en œuvre.

Ces buts sont atteints avec un couvercle destiné à coopérer avec un récipient de cuisson, ledit couvercle comprenant un capot muni d'un dispositif de mesure du débit de vapeur produite lors d'une cuisson dite « aqueuse », ledit dispositif de mesure du débit de vapeur comportant une chambre agencée au-dessus du capot qui comporte au moins un orifice primaire d'admission de vapeur dans ladite chambre, ladite chambre comportant au moins un orifice d'évacuation de la vapeur et un élément sensible à la température, caractérisé en ce que la chambre comporte au moins une perforation d'admission d'air pour générer, avec l'orifice primaire d'admission de vapeur, un mélange air/vapeur qui va suivre dans la chambre une trajectoire vers l'au moins un orifice d'évacuation, l'élément sensible à la température étant agencé sur la trajectoire du mélange air/vapeur pour émettre un signal représentatif de la température du mélange air/vapeur, ledit signal étant également représentatif du débit de vapeur produite lors de la cuisson.

Ainsi, l'admission d'air ambiant dans le flux vapeur permet d'obtenir une température T1 du flux air/vapeur inférieure à 100°C pour caractériser le début d'ébullition. Lorsque le régime d'ébullition est établi, le capteur de température va mesurer une température qui va évoluer entre une température légèrement supérieure à T1 pour caractériser une ébullition douce à une température proche ou égale à 100°C qui caractérise une ébullition forte ou très forte.

La connaissance du débit de vapeur ou d'une caractéristique représentative du débit de vapeur permet à l'utilisateur ou à un système de contrôle d'ajuster la puissance de chauffe d'un appareil de chauffage avec lequel coopère le récipient de cuisson pour réaliser la cuisson. En effet, pour réussir la cuisson, la puissance de chauffe doit permettre de générer un débit de vapeur compris dans une fourchette de valeurs prédéfinies.

Le mélange air/vapeur circule dans la chambre uniquement par un phénomène de convection naturelle.

L'admission de vapeur dans la chambre provoque une aspiration d'air à température ambiante à travers les perforations d'admission pour générer dans la chambre un mélange air/vapeur qui va circuler vers l'au moins un orifice d'évacuation de manière naturelle.

Avantageusement, la chambre comporte une paroi supérieure, l'au moins un orifice d'évacuation et l'élément sensible à la température étant agencés sur ou à proximité de la paroi supérieure.

L'air se mélange avec la vapeur le long de la trajectoire du mélange air /vapeur et le mélange est le plus homogène à la fin de cette trajectoire, au niveau de l'orifice d'évacuation. Ainsi, l'élément sensible à la température émet un signal représentatif de la température du mélange air/vapeur prise au plus près de l'orifice d'évacuation et qui est représentative du débit de vapeur.

De préférence, la chambre comporte une base agencée à proximité du capot, l'au moins une perforation d'admission d'air étant agencée sur la base.

Ainsi l'air ambiant peut se mélanger avec la vapeur sur toute la hauteur de la chambre pour que le mélange air/vapeur ait une température homogène.

Avantageusement, la chambre est cylindrique et la chambre est agencée au centre du capot.

De manière avantageuse, le couvercle comporte une poignée de préhension qui est agencée sur la chambre.

De préférence, l'au moins un orifice primaire d'admission de vapeur présente une surface de passage SV1 et l'au moins une perforation d'admission d'air présente une surface de passage SA1, le rapport SV1/SA1 étant inférieur à 0,2, de préférence inférieur à 0,05.

La demanderesse a mis en évidence qu'un tel rapport SV1/SA1 permettait à la vapeur d'entrainer suffisamment d'air pour baisser la température T1 du mélange air/vapeur de début d'ébullition à une valeur inférieure à 60°C. Une température T1 éloignée de la température de la vapeur proche de 100°C permet de caractériser une plage importante du débit de vapeur, par exemple jusqu'à 40 grammes/minute.

Avantageusement le capot comporte un orifice secondaire d'évacuation de la vapeur vers l'extérieur.

Cette disposition permet de fractionner le flux de vapeur pour avoir un dispositif de mesure du début vapeur qui conserve une taille compacte, notamment dans le cas d'utilisation du couvercle sur un récipient de cuisson de grande dimension.

De préférence, l'au moins un orifice primaire d'admission de vapeur présente une surface de passage SV1 et l'au moins un orifice secondaire d'évacuation de la vapeur présente une surface de passage SV2, le rapport SV1/SV2 étant inférieur à 1, de préférence inférieur à 0,45.

La demanderesse a mis en évidence qu'un tel rapport SV1/SV2 permettait d'obtenir une taille de la chambre et du dispositif de mesure du débit de vapeur relativement compacte par rapport à la taille du couvercle qui est adaptée à la taille des récipients de cuisson utilisés pour réaliser des cuissons dites « aqueuses ».

Avantageusement, l'élément sensible à la température est formé par au moins un élément thermochrome.

Ainsi, l'élément sensible à la température peut être formé par un élément thermochrome dont la couleur varie ou un ensemble d'éléments thermochromes dont la couleur change à une température donnée.

Par exemple, la couleur de l'élément thermochrome évolue lorsqu'il est soumis à une température comprise entre 60 et 100°C.

De préférence, l'élément sensible à la température est un capteur de température, notamment une résistance à coefficient de température négatif.

Un tel capteur de température électronique permet de mesurer la température du mélange air/vapeur de manière continue.

De préférence, l'élément sensible à la température comporte un système d'affichage de la température ou est relié à une système d'affichage.

Ainsi, dans le cas de mise en œuvre d'au moins un élément thermochrome, l'élément sensible à la température et le système d'affichage sont regroupés dans un même composant. Dans le cas de mise en œuvre d'un capteur de température électronique du type résistance à coefficient de température négatif, le système d'affichage peut être, par exemple, un afficheur à cristaux liquides. Le capteur de température et le système d'affichage sont reliés à un système de commande.

L'affichage du débit de vapeur ou d'une caractéristique représentative du débit de vapeur permet à l'utilisateur d'ajuster la puissance de chauffe d'un appareil de chauffage avec lequel coopère le récipient de cuisson.

Avantageusement, le dispositif de mesure du débit de vapeur comporte un capteur de température complémentaire agencé à proximité de l'au moins une perforation d'admission d'air.

Une telle disposition permet de corriger le signal émis par l'élément sensible à la température pour caractériser un débit de vapeur le plus proche de la réalité.

L'invention concerne également un ensemble formé par un récipient de cuisson et un couvercle tel que précédemment décrit.

Avantageusement, le récipient de cuisson est une casserole, une sauteuse ou un faitout.

L'invention sera mieux comprise à l'étude des modes de réalisation pris à titre d'exemples nullement limitatifs et illustrés dans les figures annexées dans lesquelles :
[Fig. 1] La figure 1 est une vue en perspective d'un couvercle selon un premier mode de réalisation de l'invention.
[Fig. 2] La figure 2 illustre une vue en perspective du dessous du couvercle de la figure 1.
[Fig. 3] La figure 3 illustre une vue du dessus du couvercle de la figure 1.
[Fig. 4] La figure 4 illustre une vue en coupe selon la ligne IV-IV du couvercle agencé sur le récipient de cuisson de la figure 3, le couvercle étant agencé sur un récipient de cuisson.
[Fig. 5] La figure 5 est une vue du dessus d'un couvercle selon un deuxième mode de réalisation de l'invention
[Fig. 6] La figure 6 illustre une vue en coupe selon la ligne VI-VI du couvercle de la figure 5.

On notera que, dans ce document, les termes «horizontal», «vertical», «inférieur», «supérieur», «longitudinal», «transversal», «haut», «bas», employés pour décrire le couvercle, font référence à ce couvercle en situation d'usage, lorsqu'il est monté sur un récipient de cuisson, lequel est posé sur un plan horizontal.

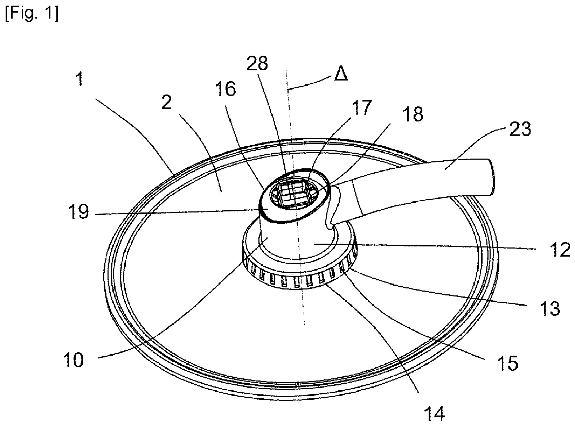

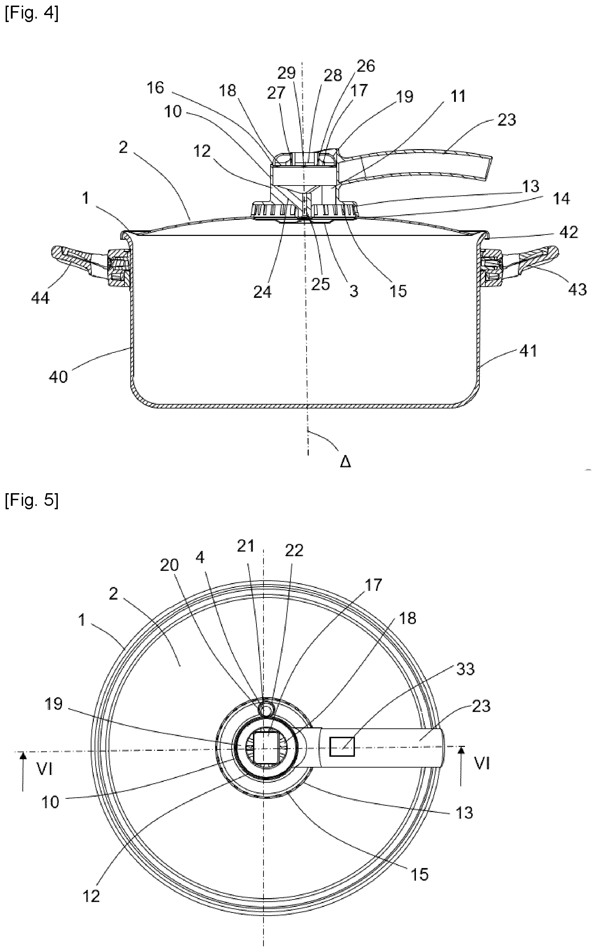

Tel que visible aux figures 1 à 6, un couvercle 1 coopère avec un récipient de cuisson 40 (Fig. 4). Dans les modes de réalisation décrits ci-dessous, le récipient de cuisson est un faitout de diamètre 24 cm. Le récipient de cuisson 40 muni du couvercle 1 est destiné à coopérer avec un appareil de chauffage (non illustré sur les figures). Le récipient de cuisson 40 comporte une paroi latérale 41 qui est prolongée vers le haut par une portion recourbée 42 vers l'extérieur. Le récipient de cuisson 40 comporte deux poignées 43, 44 agencées de manière diamétralement opposée. Le couvercle 1 comprend un capot 2 adapté à recouvrir le récipient de cuisson 40. Le capot 2 est réalisé par découpe et emboutissage d'un feuillard en acier inoxydable. Le capot 2 pourrait être formé par une plaque de verre apte à permettre la vision dans le récipient de cuisson 30.

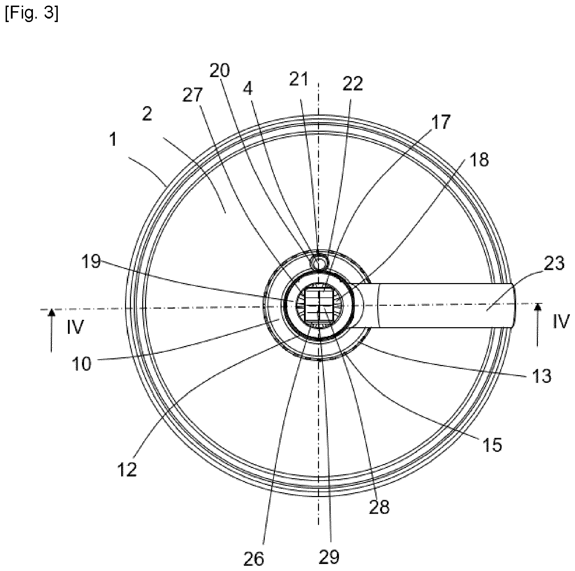

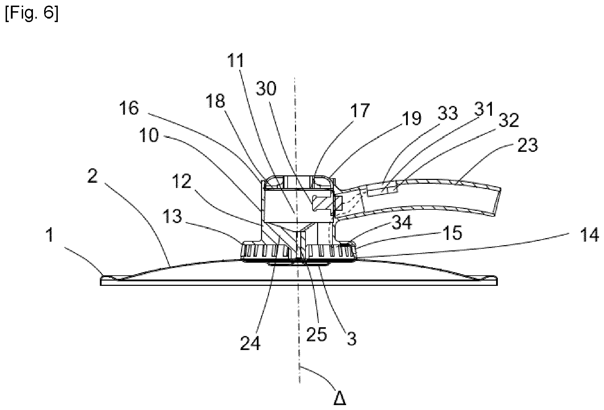

Le couvercle 1 comporte un dispositif de mesure du débit de vapeur 10 produite lors d'une cuisson dite « aqueuse ». Le dispositif de mesure du débit de vapeur 10 comporte une chambre 11 (Fig.4 et 6) agencée au-dessus du capot 2. La chambre 11 comporte une paroi cylindrique 12 qui s'étend selon un axe vertical Δ, de manière perpendiculaire au capot 2. La chambre 11 comporte une base 13 qui est agencée à une extrémité inférieure 14 de la paroi cylindrique 12. L'extrémité inférieure 14 est fermée par le capot 2 qui forme un plancher de la chambre 11. Ainsi, la base 13 est ajustée au capot 2 de manière sensiblement étanche. Le plancher de la chambre 11 comporte un orifice primaire 3 d'admission de vapeur (Fig.3) pour permettre à la vapeur générée lors d'une cuisson de passer dans la chambre 11.

La base 13 comporte une pluralité de perforations 15 d'admission d'air pour permettre à de l'air à température ambiante de pénétrer dans la chambre 11. Dans le mode de réalisation illustré aux figures 3 et 5, la base comporte 28 perforations 15 d'admission d'air réparties de manière régulière sur le pourtour de la base 13. L'admission de vapeur dans la chambre 11 provoque une aspiration d'air à température ambiante à travers les perforations 15 d'admission pour générer dans la chambre 11 un mélange air/vapeur.

La paroi cylindrique 12 comporte une extrémité supérieure 16 qui est fermée par une paroi supérieure 17 formant un plafond pour la chambre 11. La paroi supérieure 17 comporte une pluralité d'orifices d'évacuation 18 du mélange air/vapeur qui sont agencés à proximité de la paroi cylindrique 12. Dans le mode de réalisation illustré aux figures 3 et 5, la paroi supérieure 17 comporte 14 orifices d'évacuation 18 répartis de manière régulière en périphérie de la paroi supérieure 17, à une jonction avec la paroi cylindrique 12. La paroi supérieure 17 est munie d'une paroi annulaire 19 en arc de cercle qui s'étend depuis la périphérie de la paroi supérieure 17 vers le haut et vers l'axe vertical Δ de la chambre 11. La paroi annulaire 19 permet de casser la vitesse des gaz qui s'échappent de la chambre 11 et permet de concentrer le flux air/vapeur selon une direction verticale.

L'orifice primaire 3 d'admission de vapeur et les perforations 15 d'admission d'air sont dimensionnés pour obtenir une température du mélange air/vapeur à proximité des orifices d'évacuation 18 proche de 60°C lorsque la cuisson atteint le début d'ébullition.

L'orifice primaire 3 d'admission de vapeur présente un diamètre égal à 5 mm et donc une surface de passage SV1 égale à 20 mm². Les perforations 15 d'admission d'air présentent une hauteur de 8 mm et une largeur de 3 mm et donc une surface de passage SA1 égale à 3 x 8 x 28 = 672 mm². Le rapport SV1/SA1 est donc égal à 0,03. La demanderesse a mis en évidence qu'un tel rapport SV1/SA1 permettait à la vapeur d'entrainer suffisamment d'air pour baisser la température T du mélange air/vapeur de début d'ébullition à une valeur inférieure à 60°C.

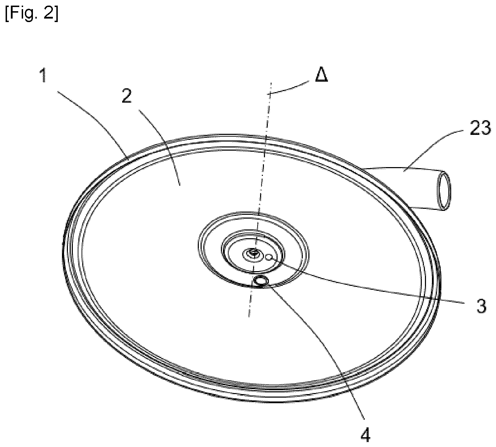

Le capot 2 comporte un orifice secondaire 4 d'évacuation de la vapeur (Fig.2). La vapeur est canalisée par un conduit vertical 20 (Fig.3 et 5) qui comporte une extrémité d'admission 21 agencée contre le capot 2 et une extrémité de sortie 22 agencée au niveau de l'extrémité supérieure 16 de la paroi cylindrique 12. Le conduit vertical 20 traverse la base 13 et est agencé le long de la paroi cylindrique 12.

Avantageusement, dans le cas où le couvercle 1 coopère avec un faitout de diamètre 24 cm, l'orifice primaire 3 d'admission de vapeur présente un diamètre égal à 5 mm et donc une surface de passage SV1 égale à 20 mm². L'orifice secondaire 4 d'évacuation de la vapeur présente un diamètre égal à 7,5 mm et donc une surface de passage SV2 égale à 44 mm². Le rapport SV1/SV2 est donc égal à 0,45. La demanderesse a mis en évidence qu'un tel rapport SV1/SV2 permettait d'obtenir une taille du dispositif de mesure du débit de vapeur 10 relativement compacte par rapport à la taille du couvercle 1.

Le couvercle 1 comporte une poignée 23 qui est agencée sur la paroi cylindrique 12. La poignée 23 s'étend radialement à la paroi cylindrique 12, de manière parallèle au capot 2. La paroi cylindrique 12 est agencée au centre du capot 2. La chambre 11 comporte trois parois 24 (fig.3 et 5) agencées à 120° qui supportent un fut de vissage 25 agencé au centre de la chambre 11. La chambre 11 est fixée sur le capot 2 par une vis agencée dans le fut de vissage 25.

Dans un premier mode de réalisation illustré aux figures 1 à 4, la paroi supérieure 17 comporte une face supérieure 26 qui est munie d'un logement 27 de réception de 8 éléments thermochromes 28 (Fig.3) qui forment l'élément sensible à la température. Chaque élément thermochrome 28 est une étiquette thermochrome qui change de couleur à une température prédéfinie : les éléments thermochromes 28 changent de couleur tous les 5°C avec le premier élément thermochrome qui change de couleur à 60°C et le dernier élément thermochrome qui change de couleur à 95°C. Ainsi les éléments thermochromes 28 forment un système d'affichage 29 de la température de la paroi supérieure 17 par incrément de 5°C, de 60°C à 95°C, qui est représentative de la température du débit de vapeur. Les éléments thermochromes 28 émettent un signal visuel représentatif de la température du mélange air/vapeur et par conséquent représentatif du débit de vapeur produit lors de la cuisson.

De manière avantageuse, la paroi supérieure 17 est réalisée en un matériau bon conducteur de la chaleur, notamment en aluminium.

Dans un deuxième mode de réalisation illustré aux figures 5 et 6, l'élément sensible à la température est un capteur de température 30 (Fig.6) du type à résistance à coefficient de température négatif. Le capteur de température 30 est agencé sous la paroi supérieure 17, sur la paroi cylindrique 12 au niveau de la jonction avec la poignée 23. Le dispositif de mesure du débit de vapeur 10 comporte un système de contrôle 31 auquel est relié le capteur de température 30. Le système de contrôle 31 comporte une mémoire 32 dans laquelle est stockée une table de correspondance entre la température mesurée par le capteur de température 30 et le débit de vapeur. Le système de contrôle 31 comporte un système d'affichage 33 du débit de vapeur déterminé à partir de la table pour une température mesurée par le capteur de température 30.

Des essais de recettes mijotées ont été réalisées avec un récipient de cuisson muni d'un couvercle 1 comportant le dispositif de mesure du débit de vapeur 10. Le récipient de cuisson muni du couvercle 1 coopère avec un appareil de chauffage qui comporte un réglage de puissance allant d'une position 1 à une position 10. Pour une recette donnée, on règle la puissance de chauffage en faisant croitre la position du réglage par palier de temps successif, le palier de temps étant suffisant pour obtenir une ébullition stabilisée. Lorsque l'ébullition est stabilisée, on mesure, pour la position de réglage de puissance de chauffage, la température à l'emplacement de l'élément sensible à la température 28, 30 et le débit de vapeur qui s'échappe par les orifices d'évacuation 18 de la vapeur.

Le tableau ci-dessous est une synthèse des mesures réalisées dans les premier et deuxième modes de réalisation lorsque le couvercle 1 est agencé sur un faitout de diamètre 24 cm.

**[table 1]**

| Position de réglage | T mesurée (°C) | Débit de vapeur (gr/mn) |
|---|---|---|
| 9 | 88 | 43 |
| 8 | 85 | 23 |
| 7 | 84 | 17 |
| 6 | 83 | 8 |
| 5 | 77 | 5 |
| 4 | 61 | 3 |
| 3 | 57 | 0,5 |

La demanderesse a sélectionné 5 recettes mijotées : bœuf bourguignon, lentilles, soupe à l'oignon, chutney et bouillon. Ces 5 recettes mijotées ont été réalisées un grand nombre de fois à différentes puissances de chauffe d'un appareil de chauffage, dans différents récipients de cuisson, toutes en présence du couvercle. Le résultat des essais est que les 5 recettes seront réussies si la puissance de chauffe de l'appareil de chauffage est réglée de façon à obtenir un débit autour de 5 gr/mn, entre une valeur minimum de 0,5 gr/mn et une valeur maximum de 9 gr/mn de vapeur.

Ainsi, l'utilisateur va régler la puissance de chauffe de l'appareil de chauffage pour obtenir un débit de vapeur autour de 5 gr/mn qui correspond à une température du mélange air/vapeur mesurée par le capteur de température autour de 77°C.

En fonctionnement, l'utilisateur place dans le récipient de cuisson 40 les ingrédients nécessaires pour réaliser une cuisson dite « aqueuse », par exemple un bœuf bourguignon. Il positionne ensuite le couvercle 1 muni du dispositif de mesure du débit de vapeur 10 sur le récipient de cuisson 40 puis l'ensemble formé par le récipient de cuisson 40 et le couvercle 1 sur un appareil de chauffage. Il règle la puissance de chauffe par exemple sur la position 8 pour chauffer les ingrédients et démarrer l'ébullition qui va générer de la vapeur. De la vapeur va passer dans l'orifice secondaire 4 pour sortir directement du récipient de cuisson 40 et de la vapeur va passer dans l'orifice primaire 3 pour pénétrer dans la chambre 11. Le flux de vapeur qui se dirige vers le haut de la chambre 11 va entrainer de l'air qui entre dans la chambre 11 par les perforations 15 d'admission d'air pour générer un mélange air/vapeur qui va suivre dans la chambre 11 une trajectoire montante pour s'échapper de manière continue par les orifices d'évacuation 18. Le mélange air/vapeur a une température dépendant directement du taux de vapeur admise dans la chambre 11. L'élément sensible à la température 28, 30 qui est agencé sur la trajectoire du mélange air/vapeur va réagir à la température du mélange air/vapeur. Dans le premier mode de réalisation, les éléments thermochromes 28 vont changer de couleur jusqu'à ce que l'élément thermochrome correspondant à une température de 85°C change de couleur de manière stable, une telle température correspondant à un débit de vapeur de 23 gr/min correspondant à une ébullition forte. L'utilisateur va ensuite de manière successive régler la puissance de chauffe pour amener un changement stable de couleur de l'élément thermochrome correspondant à une température de 75°C, l'élément thermochrome correspondant à une température de 80°C ne changeant pas de couleur. Une telle température correspond à un débit de vapeur de 5 gr/min correspondant à une ébullition stable permettant de réaliser la cuisson du bœuf bourguignon pendant 2 heures, sans brûler. Dans le deuxième mode de réalisation, le capteur de température 30 est relié à un système d'affichage 33 qui affiche directement le débit de vapeur à partir de la table de correspondance entre la température mesurée par le capteur et le débit de vapeur stocké dans la mémoire 32 du système de contrôle 31.

Dans une variante de réalisation, le dispositif de mesure du débit de vapeur 10 comporte un capteur de température complémentaire 34 (Fig.6) agencé dans la base 13 à proximité d'une perforation 15 d'admission d'air. Le capteur de température 34 est relié au système de contrôle 31. Le système de contrôle 31 pourrait communiquer avec un système de commande de l'appareil de chauffage par une liaison sans fil pour piloter le chauffage.

Bien entendu, l'invention n'est nullement limitée aux modes de réalisation décrits et illustrés qui n'ont été donnés qu'à titre d'exemples. Des modifications restent possibles, notamment du point de vue de la constitution des divers éléments ou par substitution d'équivalents techniques, sans sortir pour autant du domaine de protection de l'invention.

Dans une variante de réalisation, l'orifice secondaire 4 comporte un dispositif de réglage de la surface de passage de la vapeur pour permettre au couvercle muni du dispositif de mesure du débit de vapeur de coopérer avec des récipients de cuisson de tailles différentes. Le dispositif de réglage peut être configuré pour réduire la surface de passage de la vapeur et ainsi le couvercle muni du dispositif de mesure du débit de vapeur peut coopérer avec un récipient de petite taille, par exemple une casserole de diamètre 18 cm ou le dispositif de réglage peut être configuré pour augmenter la surface de passage de la vapeur et ainsi le couvercle muni du dispositif de mesure du débit de vapeur peut coopérer avec un récipient de grande taille, par exemple une sauteuse de diamètre 24 cm.

## Revendications

1. Couvercle (1) destiné à coopérer avec un récipient de cuisson (40), ledit couvercle (1) comprenant un capot (2) muni d'un dispositif de mesure du débit de vapeur (10) produite lors d'une cuisson dite « aqueuse », ledit dispositif de mesure du débit de vapeur (10) comportant une chambre (11) agencée au-dessus du capot (2) qui comporte au moins un orifice primaire (3) d'admission de vapeur dans ladite chambre (11), ladite chambre (11) comportant au moins un orifice d'évacuation (18) de la vapeur et un élément sensible à la température (28, 30), la chambre (11) comportant au moins une perforation (15) d'admission d'air pour générer, avec l'orifice primaire (3) d'admission de vapeur, un mélange air/vapeur qui va suivre dans la chambre (11) une trajectoire vers l'au moins un orifice d'évacuation (18), l'élément sensible à la température (28,30) étant agencé sur la trajectoire du mélange air/vapeur pour émettre un signal représentatif de la température du mélange air/vapeur, **caractérisé en ce que** le mélange air/vapeur circule dans la chambre (11) uniquement par un phénomène de convection naturelle, et **en ce que** ledit signal est également représentatif du débit de vapeur produite lors de la cuisson.

2. Couvercle (1) selon la revendication 1, **caractérisé en ce que** la chambre (11) comporte une paroi supérieure (17), l'au moins un orifice d'évacuation (18) et l'élément sensible à la température (28, 30) étant agencés sur ou à proximité de la paroi supérieure (17).

3. Couvercle (1) selon l'une quelconque des revendications 1 à 2, **caractérisé en ce que** la chambre (11) comporte une base (13) agencée à proximité du capot (2), l'au moins une perforation (15) d'admission d'air étant agencée sur la base (13).

4. Couvercle (1) selon l'une quelconque des revendications 1 à 3, **caractérisé en ce que** la chambre (11) est cylindrique et **en ce que** la chambre (11) est agencée au centre du capot (2).

5. Couvercle (1) selon l'une quelconque des revendications 1 à 4, **caractérisé en ce que** l'au moins un orifice primaire (3) d'admission de vapeur présente une surface de passage SV1 et **en ce que** l'au moins une perforation (15) d'admission d'air présente une surface de passage SA1, le rapport SV1/SA1 étant inférieur à 0,2, de préférence inférieur à 0,05.

6. Couvercle (1) selon l'une quelconque des revendications 1 à 5, **caractérisé en ce que** le capot (2) comporte un orifice secondaire (4) d'évacuation de la vapeur vers l'extérieur.

7. Couvercle (1) selon la revendication 6, **caractérisé en ce que** l'au moins un orifice primaire (3) d'admission de vapeur présente une surface de passage SV1 et **en ce que** l'au moins un orifice secondaire (4) d'évacuation de la vapeur présente une surface de passage SV2, le rapport SV1/SV2 étant inférieur à 1, de préférence inférieur à 0,45.

8. Couvercle (1) selon l'une des revendications 1 à 7, **caractérisé en ce que** l'élément sensible à la température est formé par au moins un élément thermochrome (28).

9. Couvercle (1) selon l'une des revendications 1 à 7, **caractérisé en ce que** l'élément sensible à la température est un capteur de température (30), notamment une résistance à coefficient de température négatif.

10. Couvercle (1) selon l'une des revendications 1 à 9, **caractérisé en ce que** l'élément sensible à la température (28, 30) comporte un système d'affichage (29) de la température ou est relié à un système d'affichage (33).

11. Couvercle (1) selon l'une des revendications 1 à 10, **caractérisé en ce que** le dispositif de mesure du débit de vapeur (10) comporte un capteur de température complémentaire (34) agencé à proximité de l'au moins une perforation (15) d'admission d'air.

12. Ensemble formé par un récipient de cuisson (40) et un couvercle (1) selon l'une quelconque des revendications 1 à 11.

13. Ensemble selon la revendication 12, **caractérisé en ce que** le récipient de cuisson est une casserole, une sauteuse ou un faitout.

## Patentansprüche

1. Deckel (1), der dazu vorgesehen ist, mit einem Kochbehälter (40) zusammenzuwirken, wobei der Deckel (1) eine Kappe (2) umfasst, die mit einer Messvorrichtung für den Durchsatz des Dampfes (10) ausgestattet ist, der während eines als "wässrig" bezeichneten Kochens produziert wird, wobei die Messvorrichtung für den Dampfdurchatz (10) eine über der Kappe (2) eingerichtete Kammer (11) umfasst, die mindestens eine primäre Dampfeinlassöffnung (3) in die Kammer (11) umfasst, wobei die Kammer (11) mindestens eine Dampfauslassöffnung (18) und ein temperaturempfindliches Element (28, 30) umfasst, wobei die Kammer (11) mindestens eine Lufteinlassperforierung (15) umfasst, um mit der primären Dampfeinlassöffnung (3) ein Luft/Dampfgemisch zu erzeugen, das in der Kammer (11) einem Weg zu der mindestens einen Auslassöffnung (18) folgt, wobei das temperaturempfindliche Element (28, 30) auf dem Weg des Luft/Dampfgemischs eingerichtet ist, um ein Signal auszugeben, das die Temperatur Luft/Dampfgemischs angibt, **dadurch gekennzeichnet, dass** das Luft/Dampfgemisch in der Kammer (11) lediglich durch eine Erscheinung natürlicher Konvektion zirkuliert und dadurch, dass das Signal auch den Durchsatz des während des Kochens produzierten Dampfes angibt.

2. Deckel (1) nach Anspruch 1, **dadurch gekennzeichnet, dass** die Kammer (11) eine obere Wand (17) umfasst, wobei die mindestens eine Auslassöffnung (18) und das temperaturempfindliche Element (28, 30) auf oder in der Nähe der oberen Wand (17) eingerichtet sind.

3. Deckel (1) nach einem der Ansprüche 1 bis 2, **dadurch gekennzeichnet, dass** die Kammer (11) eine Basis (13) umfasst, die in der Nähe der Kappe (2) eingerichtet ist, wobei die mindestens eine Lufteinlassperforierung (15) auf der Basis (13) eingerichtet ist.

4. Deckel (1) nach einem der Ansprüche 1 bis 3, **dadurch gekennzeichnet, dass** die Kammer (11) zylindrisch ist und dadurch, dass die Kammer (11) in der Mitte der Kappe (2) eingerichtet ist.

5. Deckel (1) nach einem der Ansprüche 1 bis 4, **dadurch gekennzeichnet, dass** die mindestens eine primäre Dampfeinlassöffnung (3) eine Durchgangsoberfläche SV1 aufweist und dadurch, dass die mindestens eine Lufteinlassperforierung (15) eine Durchgangsoberfläche SA1 aufweist, wobei das Verhältnis SV1/SA1 kleiner als 0,2, vorzugsweise kleiner als 0,05 ist.

6. Deckel (1) nach einem der Ansprüche 1 bis 5, **dadurch gekennzeichnet, dass** der Deckel (2) eine sekundäre Dampfauslassöffnung (4) zur Außenseite hin umfasst.

7. Deckel (1) nach Anspruch 6, **dadurch gekennzeichnet, dass** die mindestens eine primäre Dampfeinlassöffnung (3) eine Durchgangsoberfläche SV1 aufweist und dadurch, dass die mindestens eine sekundäre Dampfauslassöffnung (4) eine Durchgangsoberfläche SV2 aufweist, wobei das Verhältnis SV1/SV2 kleiner als 1, vorzugsweise kleiner als 0,45 ist.

8. Deckel (1) nach einem der Ansprüche 1 bis 7, **dadurch gekennzeichnet, dass** das temperaturempfindliche Element aus mindestens einem thermochromen Element (28) gebildet ist.

9. Deckel (1) nach einem der Ansprüche 1 bis 7, **dadurch gekennzeichnet, dass** das temperaturempfindliche Element ein Temperatursensor (30) ist, insbesondere ein Widerstand mit negativem Temperaturkoeffizienten.

10. Deckel (1) nach einem der Ansprüche 1 bis 9, **dadurch gekennzeichnet, dass** das temperaturempfindliche Element (28, 30) ein Temperaturanzeigesystem (29) umfasst oder mit einem Anzeigesystem (33) verbunden ist.

11. Deckel (1) nach einem der Ansprüche 1 bis 10, **dadurch gekennzeichnet, dass** die Messvorrichtung für den Dampfdurchsatz (10) einen zusätzlichen Temperatursensor (34) umfasst, der in der Nähe der mindestens einen Lufteinlassperforierung (15) eingerichtet ist.

12. Anordnung, die aus einem Kochbehälter (40) und einem Deckel (1) nach einem der Ansprüche 1 bis 11 gebildet ist.

13. Anordnung nach Anspruch 12, **dadurch gekennzeichnet, dass** der Kochbehälter ein Stieltopf, eine Schmorpfanne oder ein Kochtopf ist.

## Claims

1. Lid (1) intended to engage with a cooking container (40), said lid (1) comprising a cap (2) provided with a device for measuring the steam flow (10) produced during a so-called "water" cooking, said device for measuring the steam flow (10) comprising a chamber (11) arranged above the cap (2) which comprises at least one steam inlet primary orifice (3) in said chamber (11), said chamber (11) comprising at least one steam discharge orifice (18) and a temperature-sensitive element (28, 30), the chamber (11) comprising at least one air inlet perforation (15) to generate, with the steam inlet primary orifice (3), an air/steam mixture which will follow into the chamber (11), a path to the at least one discharge orifice (18), the temperature-sensitive element (28, 30) being arranged on the air/steam mixture path to emit a signal representative of the temperature of the air/steam mixture, **characterised in that** the air/steam mixture circulates in the chamber (11) only by a natural convection phenomenon, and **in that** said signal is also representative of the steam flow produced during cooking.

2. Lid (1) according to claim 1, **characterised in that** the chamber (11) comprises an upper wall (17), the at least one discharge orifice (18) and the temperature-sensitive element (28, 30) being arranged on or near the upper wall (17).

3. Lid (1) according to any one of claims 1 to 2, **characterised in that** the chamber (11) comprises a base (13) arranged near the cap (2), the at least one air inlet perforation (15) being arranged on the base (13).

4. Lid (1) according to any one of claims 1 to 3, **characterised in that** the chamber (11) is cylindrical and **in that** the chamber (11) is arranged at the centre of the cap (2).

5. Lid (1) according to any one of claims 1 to 4, **characterised in that** the at least one steam inlet primary orifice (3) has a passage surface SV1 and **in that** the at least one air inlet perforation (15) has a passage surface SA1, the SV1/SA1 ratio being less than 0.2, preferably less than 0.05.

6. Lid (1) according to any one of claims 1 to 5, **characterised in that** the cap (2) comprises a secondary orifice (4) for discharging steam outwards.

7. Lid (1) according to claim 6, **characterised in that** the at least one steam inlet primary orifice (3) has a passage surface SV1 and **in that** the at least one secondary orifice (4) for discharging steam has a passage surface SV2, the SV1/SV2 ratio being less than 1, preferably less than 0.45.

8. Lid (1) according to one of claims 1 to 7, **characterised in that** the temperature-sensitive element is formed by at least one thermochromic element (28).

9. Lid (1) according to one of claims 1 to 7, **characterised in that** the temperature-sensitive element is a temperature sensor (30), in particular a resistance with a negative temperature coefficient.

10. Lid (1) according to one of claims 1 to 9, **characterised in that** the temperature-sensitive element (28, 30) comprises a temperature display system (29) or is connected to a display system (33).

11. Lid (1) according to one of claims 1 to 10, **characterised in that** the device for measuring the steam flow (10) comprises a complementary temperature sensor (34) arranged near the at least one air inlet perforation (15).

12. Assembly formed by a cooking container (40) and a lid (1) according to any one of claims 1 to 11.

13. Assembly according to claim 12, **characterised in that** the cooking container is a saucepan, a frying pan or a pot.
